# NEUE EUROPÄISCHE PATENTSCHRIFT

(11) **EP 3 470 298 B2**
(45) Veröffentlichungstag und Bekanntmachung des Hinweises auf die Entscheidung über den Einspruch: **17.06.2026**
(45) Hinweis auf die Patenterteilung: 14.06.2023
(21) Anmeldenummer: 18000490.5
(22) Anmeldetag: 01.06.2018
(51) Int. Cl.: B62B 3/16, F16B 7/04, F16B 19/02

(54) **STAPELSICHERUNG FÜR TRANSPORTKARREN**
STACK SECURING FOR TRANSPORT TRUCKS
SÉCURITÉ D'EMPILAGE POUR CHARIOT TRANSPORTEUR

(30) Priorität: 22.09.2017 DE 102017008892
(43) Veröffentlichungstag der Anmeldung: 17.04.2019
(73) Patentinhaber: Uwe, Dominik, 48477 Dreierwalde (DE)
(72) Erfinder: Uwe, Dominik, 48477 Dreierwalde (DE)
(74) Vertreter: Castell, Klaus

(56) Entgegenhaltungen:
- EP-A1- 1 393 617
- EP-A2- 1 245 470
- AU-B3- 639 408
- AU-B3- 639 408
- DE-U1- 202005 013 047
- DE-U1- 202011 105 716
- DE-U1- 202011 105 716
- DE-U1- 8 109 779
- DE-U1- 8 109 779
- FR-A1- 2 716 661
- FR-A1- 2 716 661
- GB-A- 2 202 604
- GB-A- 2 312 724
- GB-A- 2 318 603
- GB-A- 2 531 396
- KR-Y1- 200 277 933
- NL-C1- 1 008 366
- NL-C1- 1 008 366
- US-A- 3 131 784
- US-A- 5 127 762
- US-A- 5 127 762
- US-A- 6 032 965
- US-A- 6 032 965
- "Stapelhülse für CC-Container gewinnt Innovationspreis", 23 January 2018 (2018-01-23), pages 1 - 2, XP093119536, Retrieved from the Internet <URL:https://taspo.de/uebersicht/stapelhuelse-fuer-cc-container-gewinnt-innovationspreis/> [retrieved on 20240115]
- "INDEGA prämiert Innovation", 26 January 2018 (2018-01-26), pages 1 - 2, XP093119544, Retrieved from the Internet <URL:https://www.gruener-markt-online.de/aktuelles/news/article-5684015-200534/indega-praemiert-innovation-.html> [retrieved on 20240115]

## Beschreibung

Die Erfindung betrifft eine Stapelsicherung nach Anspruch 1.

Es ist bekannt, in Transportfahrzeugen, insbesondere straßenfahrenden Transportfahrzeugen, die Ladung über ein Verspannen mittels Gurten zu sichern. Dabei wird die Ladung häufig auf Paletten gehalten, so daß ein Verspannen mit übergreifenden Gurten nach unten hin, etwa zu längs seitlich im Fahrzeug befindlichen Lochschienen, als Stapelsicherung einfach möglich ist.

Es sind jedoch als Ladung u. a. rollbare sog. CC-Container oder DC- bzw. EC-Container für insbesondere Pflanzen bekannt, die nur eine stabile Bodenfläche dicht oberhalb ihrer Rollen und darüber nur einzelne, leicht deformierbare und auch relativ leicht nach außen oder innen biegbare Eckstäbe aufweisen. Im Lauf der Zeit weisen diese verschiedene Deformationen auf und sind schon insofern stabilitätstechnisch als Halterung einer darüber befindlichen weiteren Transportkarre problematisch. Bei mehreren übereinander gestapelten Containern dieser Art können dann bei Deformation der unteren die oberen Lagen verkanten, schräg stehen oder gar herunterfallen und zu Personen- und Sachschäden führen.

Bei solchen Transportkarren sind in letzter Zeit im gestapelten Zustand Unfälle vorgekommen, die zu Fingerabquetschungen und ähnlichen schweren Verletzungen geführt haben. Dieses Problem wird dadurch verschärft, daß ein Stapel aus solchen Transportkarren für bis zu 400 kg Gesamtlast vorgesehen ist und daher schon bei einer Zweifachstapelung der obere Transportkarren noch eine Last von 200 kg, verteilt auf vier Eckstützen, in die untere Transportkarre einleitet, also pro Eckstütze eine Last von 50 kg.

Die üblicherweise als offene Vierkantprofile ausgebildeten Eckstützen sind in untere Rahmenhülsen einsteckbar, die jeweils fester Bestandteil eines bodenseitigen Tragrahmens einer solchen Transportkarre sind. Bei einer Höhe dieser Eckstützen von ca. 74 bis 78 Zentimetern fehlt oberhalb der vertikal nur gering erstreckten Rahmenhülsen jede weitere Unterstützung. Zudem haben diese Eckstützen oft unterschiedliche Höhen mit ein bis zwei Zentimetern Differenz untereinander, wodurch die Unsicherheit beim Stapeln und die Gefahr eines Verkippens einer oberen Lage mit entsprechender Quetschgefahr weiter vergrößert ist.

Die NL 1 008 366 C1 zeigt eine stapelbare Transportkarre, bei der in den Eckbereichen Hülsenprofile stehen. Diese sind nach unten hin von gegenüber den Hülsenprofilen breiteren Fußbereichen fest umgriffen. Diese fest angeformten Füße weisen jeweils eine nach unten vorstehende und ebenfalls feste Nase auf und können so auf obere Enden von Hülsenprofilen einer dann darunter befindlichen Transportkarre aufgesetzt werden, um so eine Stapelbarkeit zu ermöglichen.

Die US 5 127 762 A zeigt einen Griff für eine fahrbare Karre, wobei der Griff zumindest teilweise hohl und über ein Zwischenstück zusammenhaltbar ist, der in zwei offene, hohle Enden des Griffes eingreift und dort über ausgreifende Federbügel formschlüssig halterbar ist. Aufragende Eckstützen gibt es hier nicht. Auch ein frei beweglicher Hülsenkörper, in den eine Eckstütze einsteckbar ist und der einen Sicherungsansatz aufweist, ist hier nicht offenbart, sondern das Zwischenstück greift in diesem Stand der Technik selbst in die rohrartigen Griffstücke ein und sichert dieses durch nach außen federnde Elemente. Dies ist aber nur möglich, wenn die Griffstücke entsprechende Ausnehmungen aufweisen, also von Anfang an an die Zwischenstücke angepaßt sind.

Die DE 20 2011 105 716 U1 zeigt ein Transportsystem mit einem flächigen Boden, jedoch ohne seitliche Eckstützen. Für die Abstützung ist ein umlaufender Zwischenrahmen vorgesehen, der außen stückweise stehende Rahmenteile aufweist, die für eine Zentrierung auf einer Palette sorgen sollen und hierzu die Ausmaße der Palette mindestens aufweisen muß, also ein sehr großes und unhandliches Zusatzteil ausbildet.

Die US 6,032,965 zeigt eine Speichereinheit mit mehreren flexiblen Fächern, deren Anzahl durch An- oder Abbau von weiteren Fächern übereinander veränderbar ist. Dabei sind aufwärts weisende Vertikalträger und die Fächer tragende Querträger über Verbinder aneinander halterbar, die jeweils auf einen unteren Vertikalträger aufsteckbar sind und sich dabei auf einem oberen Rand des unteren Vertikalträgers abstützen. Diese Verbinder sind feste Bestandteile der Konstruktion.

Die FR 2 716 661 zeigt eine Speichereinheit mit mehreren Regalböden, deren Anzahl durch An- oder Abbau von weiteren Regalböden übereinander veränderbar ist. Dabei sind aufwärts weisende Vertikalträger und Querträger über Verbinder aneinander halterbar, die jeweils auf einen unteren Vertikalträger aufsteckbar sind und sich dabei auf einem oberen Rand des unteren Vertikalträgers abstützen. Diese Verbinder sind feste Bestandteile der Konstruktion.

Der Erfindung liegt das Problem zugrunde, hier eine Verbesserung der Sicherheit zu erreichen.

Die Erfindung löst dieses Problem durch eine Stapelsicherung mit den Merkmalen des Anspruchs 1. Weitere vorteilhafte Merkmale und Weiterbildungen der Erfindung ergeben sich aus den Ansprüchen 2 für eine Stapelsicherung sowie aus den Ansprüchen 3 bis 16 für mit derartigen Stapelsicherungen versehene Transportkarren.

In der erfindungsgemäßen Ausbildung ist in Ausbildung nach Anspruch 3 eine Möglichkeit geschaffen, eine obere Transportkarre sicher auf den Eckstützen einer darunter befindlichen Transportkarre abzustützen, ohne daß es zu einem Abrutschen oder Kippen der oberen Transportkarre kommen kann. Diese Stapelung kann beispielsweise die zweite Lage auf einer ersten, unteren Lage von Transportkarren oder auch die dritte, oberste Lage auf einer zweiten, mittleren Lage von Transportkarren betreffen.

In der Ausbildung nach Anspruch 4 ist dadurch, daß jeweils das untere Ende eines Hülsenprofils der oberen Transportkarre zumindest im wesentlichen seitlich nach Art einer Manschette umgriffen ist, eine effektive Sicherung gegen ein Handeinklemmen und gegen ein Verkippen des Hülsenprofils gegen die darunter befindliche Eckstütze erreicht.

In einer nicht beanspruchten Ausbildung ist dadurch, daß eine Stapelsicherung das obere Ende einer Eckstütze der unteren Transportkarre über einen Haltebereich zumindest im wesentlichen seitlich umgreift, ein sicherer Halt für die Stapelsicherung an der unteren Transportkarre gewährleistet. Gleichzeitig ist dadurch, daß die Stapelsicherung oberhalb des Haltebereichs mit zumindest einem Kragen versehen ist, der ein Hülsenprofil einer oberen Transportkarre in zumindest zwei Richtungen an horizontaler Bewegung hemmt, eine Sicherung gegen eine gefährliche Bewegung der jeweils oberen Transportkarre gebildet. Diese Sicherung muß nicht alle Bewegungsrichtungen betreffen, sondern kann zum Beispiel nur in einer Längs- und einer Querrichtung nach innen wirksam sein, während in der gegenüberliegenden Längs- und Querrichtung nach außen eine Bewegung möglich bleibt.

Insbesondere kann hierfür der Kragen zumindest zwei über Eck erstreckte, die Bewegung in Horizontalrichtung hemmende Begrenzungsstrukturen umfassen. Da diese beide nach innen (quer und längs innen) gewandt sind, ist dann außen an den Außenbereich keine weitere Struktur oben angeformt, so daß quer und längs außen kein Teilbereich der Stapelsicherung über das Maß der Transportkarren vorsteht und daher die Stapelbreite und die Stapellänge nicht vergrößert werden, was im LKW einen großen Packvorteil bedeuten kann.

Eine Weiterverwendung der bisher im Umlauf befindlichen Eckstützen ist möglich, wenn die Stapelsicherung ein nachrüstbares Einzelteil ist, das aufgrund der geringen Ausmaße (maximale Kantenlänge bei ca. 150 Millimetern oder weniger) auch in großer Stückzahl im LKW mitgeführt werden kann.

Da die Stapelsicherungen frei von den Transportkarren bewegliche Einzelteile bilden, ist es besonders vorteilhaft, wenn die Stapelsicherung gegenüber der oberen und gegenüber der unteren Transportkarre werkzeugfrei lösbar ist. Dann kann das Aufsetzen und auch das Abnehmen der Stapelsicherungen auch von nicht geschultem Personal in Sekunden erledigt werden.

Insbesondere kann jede der Eckstützen einer unteren Transportkarre mit einer Stapelsicherung versehbar sein, um so umlaufend einen guten Schutz gegen ein Abrutschen einer oberen Transportkarre und gegen eine Klemmgefahr zu erreichen.

Besonders vorteilhaft ist die Stapelsicherung in sich formstabil, so daß sie nicht nur eine Klemmsicherung für die Hand bildet, sondern auch mit ihrer eigenen Stabilität eine Seitwärtsbeweglichkeit der oberen Transportkarre unterbindet und damit deren Abrutschen verhindert.

Günstig kann die Stapelsicherung auf ein oberes, offenes Ende einer Eckstütze aufsetzbar sein und zumindest einen Halteansatz aufweisen, der ein Abrutschen der Stapelsicherung nach unten auf der Eckstütze verhindert. Beim Aufsetzen der Stapelsicherung auf die Eckstütze kommt der zumindest eine Halteansatz automatisch zum Eingriff, so daß in jedem Fall ein Durchrutschen der Stapelsicherung nach unten verhindert wird.

Der Halteansatz kann dabei durch eine oder mehrere ausgestanzte und nach innen gebogene Haltezunge(n) gebildet sein, die im Einsatz auf eine obere Kante der Eckstütze aufsetzen.

Sehr vorteilhaft kann der Halteansatz durch einen oder mehrere Stege gebildet sein, die in montierter Stellung auf dem oberen Ende einer Eckstütze aufliegt oder aufliegen und dadurch die Stapelsicherung sicher halten.

Sofern als Halteansatz zwei Stege vorgesehen sind, die mit Abstand zueinander angeordnet sind, können zwischen denen schräg eingebogene Enden eines unteren Endes eines Hülsenprofils einer oberen Transportkarre eingreifen und damit besonders abrutschsicher gehalten sein.

Auch ein umlaufender Steg kann vorgesehen sein, der auf allen vier Seiten der Eckstütze aufliegen kann. Eine solche Lösung kann insbesondere bei Kunststoffkörpern als Stapelsicherungen einfach angeformt sein.

Die Stapelsicherung kann insgesamt hülsenartig, beispielsweise mit einem Vierkantprofil, ausgebildet sein und in montierter, also auf die Eckstütze aufgesetzter, Stellung sowohl das obere Ende einer Eckstütze als auch das untere Ende eines Hülsenprofils zumindest bereichsweise außenseitig umgreifen. Die hülsenartige Ausbildung der Stapelsicherung erstreckt sich dann beispielsweise über ihre ganze Länge und kann so von einem Strangpreßprofil einfach und preiswert abgelängt sein.

Alternativ aber nicht beansprucht ist nur im unteren Bereich eine hülsenförmige, manschettenartige Ausbildung möglich, wohingegen oben nur über Teilbereiche ein Kragen daran anschließt.

Eine solche Transportkarre weist üblicherweise und stabilitätstechnisch günstig einen Tragrahmen auf, der horizontale Profile umfaßt, die an die Hülsenprofile angebunden sind, wobei zumindest ein Teil der Bereiche der Anbindung mit einem vertikalen Steg ausgesteift ist und wobei diese Stege gegenüber den Profilen nach unten vorstehen. Damit die Stapelsicherungen nicht unter den Steg greifen und dort wacklig stehen, weisen die Stapelsicherungen in ihren oberen Bereichen jeweils zumindest eine Ausnehmung auf, in die in montierter Stellung der Steg der oberen Transportkarre eingreift. Damit kann sich die Stapelsicherung bis nach oben zu den horizontalen Profilen erstrecken, so daß diese trotz des genannten Stegs auf dem oberen Rand der Stapelsicherung wackelfrei aufliegen.

Sehr vorteilhaft ist dabei die Ausnehmung als vertikale Schlitzausnehmung ausgebildet, in die der als Knotenblech dienende Steg von oben eintauchen kann. Die Stabilität der Stapelsicherung ist dennoch nicht ernsthaft durch die schmale Ausnehmung geschwächt.

Die Stapelsicherung umfaßt ein Vierkantprofil. Wenn zumindest in zwei einander diagonal gegenüber gelegenen oberen Eckbereichen eine solche Ausnehmung für einen Steg vorgesehen ist, kann eine solche Stapelsicherung auf beliebige Eckstützen aufgesetzt werden, unabhängig davon, ob es sich um eine linke oder eine rechte Ecke handelt und unabhängig davon, ob der Steg sich von dieser Ecke nach links oder nach rechts erstreckt.

Wie weiter unten noch ausgeführt ist, kann bei einer symmetrischen Anordnung einer solchen Ausnehmung in einem Eckbereich auch eine einzige Ausnehmung ausreichen, um alle Einsatzausrichtungen abzudecken.

Es reicht in beiden Fällen ein einziger Typ von Stapelsicherungen aus, so daß sowohl Montage als auch Logistik besonders einfach sind.

Eine von den Transportkarren unabhängige handelbare und zu bevorratende Stapelsicherung ist in Anspruch 1 beansprucht. Sie bildet an zumindest an einem axialen Ende, nämlich dem in montierter Stellung oberen Ende, einen Hülsenkörper aus, dessen lichte innere Weite bei mindestens 40 Millimetern liegt und der im Innern zumindest einen in seinen Innenraum ragenden Sicherungsansatz aufweist, der eine überlaufende Bewegung auf einen in den Innenraum eindringbaren Körper stoppt. Ein Durchrutschen an einer Eckstütze als eindringbaren Körper ist damit verhindert.

Die axiale Länge der Stapelsicherung kann bei zumindest 120 Millimetern liegen, da eine Ausnehmung für ein Stehblech der oberen Transportkarre vorgesehen ist. Auch deutlich kürzere Ausbildungen, die unterhalb dieses Stehblechs enden, sind möglich.

Da der Hülsenkörper der Stapelsicherung an einem axial auswärts weisenden Ende zumindest eine in seinem Eckbereich gelegene Ausnehmung aufweist, kann er ein Eintauchen eines Stegs der Transportkarre ermöglichen. Insbesondere weist die Ausnehmung einen axialen Schlitz von mindestens 25 Millimeter Höhe auf, so daß ein ca. 25 Millimeter hoher Steg einer oberen Transportkarre dort vollständig eintauchen kann. Der Vorteil von zumindest zwei Ausnehmungen, die an einander diagonal gegenüberliegenden Eckbereichen des Hülsenkörpers ausgebildet sind, ist oben bereits erläutert worden.

Es kann ein einziger Typ von Stapelsicherungen für alle Ecken einer Transportkarre genügen. Insbesondere kann dieser eine Typ in unterschiedlichen Orientierungen an die Eckstützen angesetzt werden, so daß etwa die Schlitzausnehmung immer zum Innern der Transportkarre hin weist und dort den Eingriff eines Stehblechs von oben ermöglicht.

Eine Stapelsicherung, etwa als Spritzgußteil, kann mit und ohne Faserverstärkung möglich sein und kann aufgrund seiner Fertigung auch von der durchgehenden Hülsenstruktur abweichen.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:

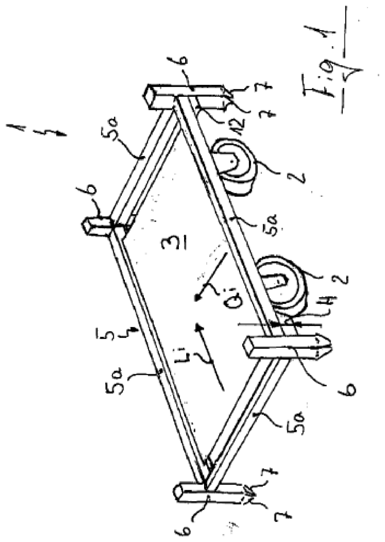

- Fig. 1:: eine schematische perspektivische Ansicht eines Tragrahmens eines sog. CC-Containers mit einer rechteckigen Grundfläche und vier nach oben offenen Rahmenhülsen in den Eckbereichen, deren Wandungsbereiche nach unten hin zu einer verjüngenden Spitze geformt sind,
- Fig. 2:: Detailansicht eines der Eckbereiche in Figur 1 mit einer eingesteckten Eckstütze, die an ihrem oberen Ende eine eingreifende Spitze der Rahmenhülse einer weiteren Transportkarre, also beispielsweise eines weiteren CCContainers, in bisher üblicher Weise abstützt,
- Fig. 3:: den oberen Eckbereich in einer erfindungsgemäßen Ausbildung mit einer Stapelsicherung mit einem Hülsenkörper, der zumindest eine Ausnehmung aufweist,
- Fig. 4:: eine schnittbildliche Ansicht des oberen Eckbereichs nach Figur 3 , wobei hier an der Stapelsicherung zwei zueinander beabstandete Stege vorgesehen sind, zwischen die die abwärts weisende Spitze der Rahmenhülse der oberen Transportkarre greift,
- Fig. 5:: eine ähnliche Ansicht wie Figur 4, jedoch einer alternativen Ausführung mit einer Stapelsicherung, bei der im oberen Bereich ein Hülsenkörper zum Umgreifen des unteren Endes der Rahmenhülse der oberen Transportkarre und im unteren Bereich ein Eingreifköper zum Eingriff in den Innenbereich der aufragenden Eckstütze vorgesehen ist,
- Fig. 6:: die Stapelsicherung nach Figur 4 in perspektivischer Ansicht, wobei das in montierter Stellung nach oben weisende Ende hier nach vorne zeigt,

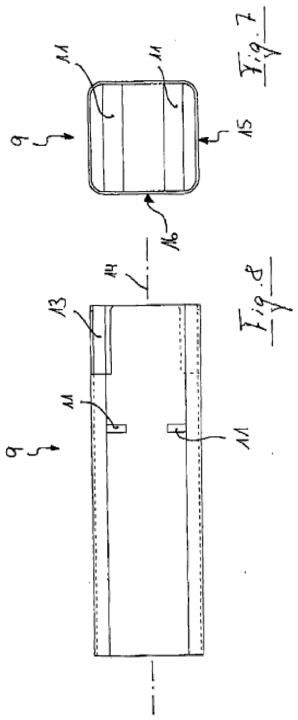

- Fig. 7:: eine Draufsicht auf die Stapelsicherung nach Figur 6,
- Fig. 8:: eine Seitenansicht der Stapelsicherung in Stellung nach Figur 7,

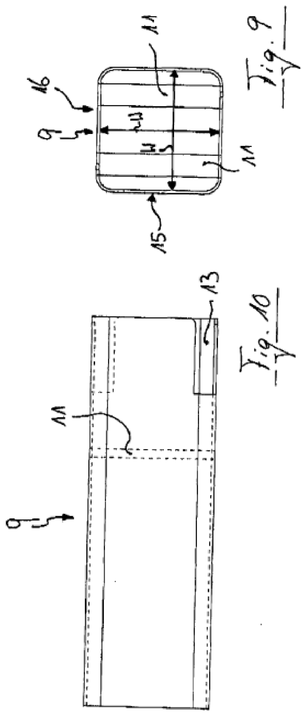

- Fig. 9:: eine ähnliche Ansicht wie Figur 7, jedoch in um 90° um eine Längsachse gedrehter Stellung,
- Fig. 10:: eine Seitenansicht der Stapelsicherung in Stellung nach Figur 9,
- Fig. 11:: eine nicht erfindungsgemäße perspektivische Ansicht einer Version einer Stapelsicherung, die im oberen Bereich nur zu zwei Seiten einen Kragen aufweist,
- Fig. 12:: einen nicht erfindungsgemäßen Schnitt entlang der Linie XII-XII in Figur 11.

Erfindungsgemäße Transportkarren oder Container 1 können beispielsweise in LKW oder auch Güterwaggons oder anderen geschlossenen Fahr- oder Flugzeugen transportiert werden. Die Laderäume können beispielsweise starre Seitenwandungen mit einer oder mehreren in diese Seitenwandungen eingelassenen Schienen mit einer Vielzahl von Einhängöffnungen haben. Auch Planenaufbauten sind möglich. Auch für ein stationäres Lagern, etwa zum Überwintern von Jungpflanzen, werden solche Transportkarren 1 verwendet.

Im befüllten Zustand der Transportkarren 1 sind diese im Lade oder Lagerraum beispielhaft in drei Lagen von rollbaren CC-Containern oder DC- oder EC-Containern übereinander gestapelt, so daß sich die eingangs erwähnten Probleme und Verletzungsgefahren ergeben. Diese Container 1 weisen hier jeweils unterseitige Rollen 2 auf, die an einer stabilen Bodenfläche 3, etwa einem Sperrholzbrett, nach unten hin weisend anmontiert sind.

Derartige Container 1 sind häufig in nach oben offener Beladung mit Pflanzen bestückt. Auch nur eine einzige Lage solcher CC- oder EC-Container ist beispielsweise möglich. Leergutfahrten mit eingeklappten Eckstützen oder Holmen 4, so daß bis zu 14 Lagen solcher Container 1 im Laderaum übereinander passen, sind ebenfalls möglich.

Die stapelbaren Transportkarren 1, die in ihrer Grundform in Millionenstückzahl im Markt befindlich sind, weisen jeweils einen in Draufsicht rechteckigen Tragrahmen 5 auf, der in vier äußeren Eckbereichen jeweils mit nach oben offenen Hülsenprofilen 6 versehen ist. Diese sind jeweils in Vertikalrichtung 10 bis 20 Zentimeter hoch parallel zur Längsachse 14 erstreckt und weisen an ihren unteren Enden konisch zu einer Spitze gebogene Laschen 7 auf.

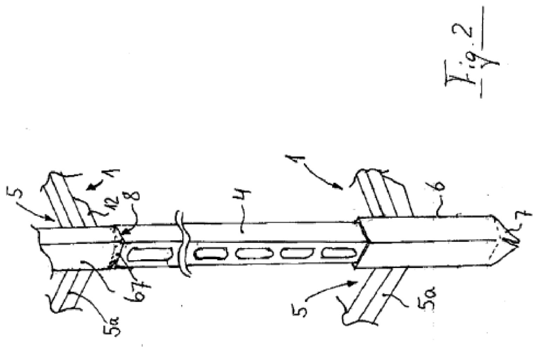

Wie in Figur 2 gut sichtbar ist, sind in die oben offenen Hülsenprofile 6 nach oben aufragende Eckstützen oder Holme 4 einsteckbar. Diese gibt es in unterschiedlichen Längen. Typisch sind Längen von ca. 74 bis 78 Zentimeter.

Diese Eckstützen 4 können mit ihren oberen Enden 8 als Abstützungen von Hülsenprofilen 6 einer weiteren Transportkarre 1 dienen, die über die Spitze aus den Laschen 7 in dieses obere Ende 8 eingreifen. In diesem Bereich ergeben sich die o. g. Verletzungsgefahren, insbesondere auch da die Eckstützen 4 im Lauf der Zeit oft verbogen sind und von recht wenig qualifiziertem Personal häufig verschieden lange Eckstützen 4 eingesetzt werden.

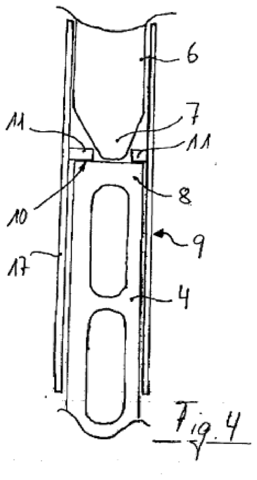

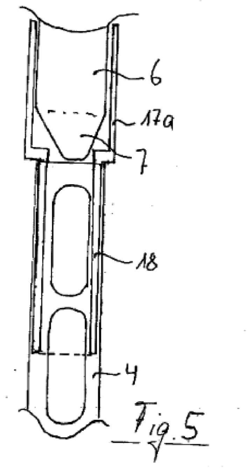

Um Verletzungen zu vermeiden, sind erfindungsgemäße Stapelsicherungen 9 an diese oberen Enden 8 der Eckstützen ansetzbar, bevor die obere Transportkarre 1 auf die Eckstützen aufgesetzt wird und dort wie bisher unmittelbar auf den oberen Enden 8 der Eckstützen 4 abstützbar sein kann, wie etwa in Figur 4 sichtbar ist. Alternativ kann die Gewichtskraft der jeweils oberen Transportkarre 1 auch mittelbar über die zwischengeschalteten Stapelsicherungen 9 abgestützt werden, wie etwa im Ausführungsbeispiel nach Figur 5 gezeigt ist.

Die Stapelsicherungen 9 können auf einzelne, auf mehrere oder insbesondere auf alle Eckstützen 4 aufgesetzt werden.

Die Stapelsicherungen 9 können dabei jeweils einen unteren Bereich eines Hülsenprofils 6 der oberen Transportkarre 1 und einen oberen Bereich 8 einer Eckstütze 4 gegeneinander zwangsausgerichtet und kippgesichert zueinander halten.

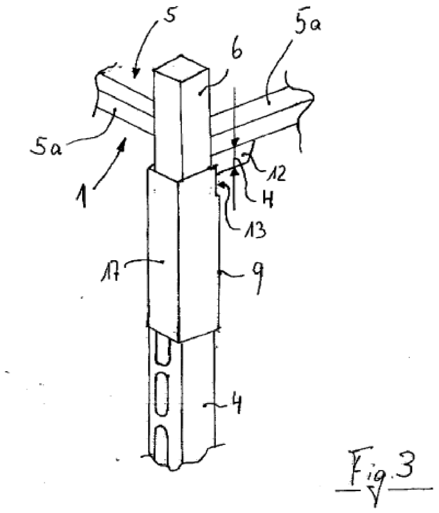

Im Ausführungsbeispiel nach Figur 3 umgreift eine Stapelsicherung 9 nach Art einer Manschette das untere Ende eines Hülsenprofils 6 der oberen Transportkarre 1 zumindest im wesentlichen seitlich und ebenso das obere Ende einer Eckstütze 4, so daß dadurch die obere Transportkarre 1 kippgesichert auf einer Eckstütze 4 der unteren Transportkarre 1 hält. Neben der Kippsicherung ist zusätzlich eine Eingriffssicherung in die Abstützung zwischen der unteren Spitze aus den Laschen 7 und dem oberen Ende 8 erreicht, so daß hier der Klemmgefahr entgegengewirkt ist. Auch Toleranzen von verschieden langen Eckstützen 4 können über zum Beispiel 20 bis 30 Millimeter ausgeglichen werden. Der ansonsten entstehende Leerraum oberhalb einer zu kurzen Eckstütze 4 wird hier von der Manschette der Stapelsicherung 9 überbrückt und damit geschlossen.

Derartige Stapelsicherungen 9 sind sowohl beim Transport als auch bei der Lagerung möglich - und auch zwischen den verschiedensten Lagen eines Stapels aus Transportkarren 1 einsetzbar: zum Beispiel zwischen einer unteren und einer ersten oberen Lage und/oder zwischen einer mittleren und einer obersten Lage.

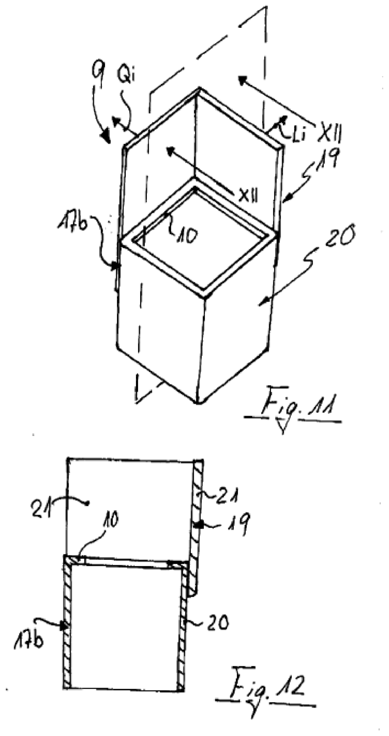

In der nicht erfindungsgemäßen Version nach Figur 11 ist die Stapelsicherung 9 so ausgebildet, daß sie nach unten hin einen umlaufenden, manschettenartigen Haltebereich 20 umfaßt, mit dem sie das obere Ende einer Eckstütze 4 der unteren Transportkarre 1 zumindest im wesentlichen seitlich umgreifen kann. Der Haltebereich 20 muß über den Umfang nicht geschlossen sein. Eine geschlossene Ausbildung als Hülsenkörper 17b zeigt jedoch eine besonders hohe Stabilität und Betriebssicherheit. Oberhalb dieses Haltebereichs 20 ist die Stapelsicherung 9 jedoch mit zumindest einem - zusammenhängenden oder unterbrochenen - Kragen 19 versehen, der in montierter Stellung ein Hülsenprofil 6 einer oberen Transportkarre 1 in zumindest zwei Richtungen an horizontaler Bewegung hemmt.

Dabei umfaßt der der Kragen 19 zumindest zwei in Draufsicht über Eck erstreckte, die Bewegung in Horizontalrichtung hemmende Begrenzungsstrukturen 21.

Hier wird die Stapelsicherung so auf die untere Eckstütze 4 mit dem Haltebereich 20 aufgesetzt, daß die eine Begrenzungsstruktur bezüglich der Transportkarre 1 in Richtung quer innen Qi und die andere Begrenzungsstruktur in Richtung längs innen Li weist. Eine auf einer weiteren Eckstütze 4 gegenüberliegende weitere Stapelsicherung 9 ist dann entsprechend um 90° gedreht in ihrer Orientierung, so daß jede der vier Stapelsicherungen die Bewegung der oberen Transportkarre 1 nach längs innen (Li) und nach quer innen (Qi) hemmt. Die vier aufgesetzten Stapelsicherungen 9 ergänzen sich dann gegenseitig, um die obere Transportkarre an jeder Horizontalbewegung zu hemmen. An den Außenseiten, also entgegen den Richtungen Qi und Li, können dann die Stapelsicherungen 9 ohne angeformte Begrenzungsstrukturen 21 verbleiben. Dann ist die Breite - und auch die Länge - eines so gebildeten Stapels durch die Stapelsicherungen 9 nicht vergrößert, was insbesondere beim Beladen eines LKW einen großen Vorteil bieten kann. Es können natürlich auch drei oder vier Seiten mit einer solchen Begrenzungsstruktur 21 versehen sein, sofern genügend Quer- bzw. Längsraum im Laderaum zur Verfügung steht. Das Vorsehen einer Begrenzungsstruktur 21 nur an einer Seite ist grundsätzlich auch möglich, beläßt jedoch für die obere Transportkarre 1 eine große horizontale Bewegungsfreiheit und ist daher nur in Ausnahmefällen hinreichend.

Gemäß den nicht erfindungsgemäßen Figuren 11 und 12 ist die dort gezeigte Stapelsicherung 9 beispielsweise - nicht zwingend - als Kunststoff-Spritzgußteil gebildet.

Da die Stapelsicherung 9 nicht die obere Transportkarre 1 abstützt, und nur ihr eigenes Gewicht trägt, ist sie aus Kunststoff, zum Beispiel POM - etwa auch faserverstärkt - ausgebildet.

Derartige Stapelsicherungen 9 können gegenüber der oberen und gegenüber der unteren Transportkarre 1 werkzeugfrei montierbar und lösbar sein und ein gewisses Übermaß von wenigen Millimetern gegenüber der Eckstütze 4, auf die sie aufzusetzen ist, aufweisen. So kann etwa ein LKW-Fahrer eine Vielzahl von derartigen Stapelsicherungen 9 mitführen und bei Bedarf auf die Eckstützen einfach aufsetzen. Ein einfaches Aufstülpen kann dabei reichen. Auch ein Einklicken in Ausnehmungen einer Eckstütze 4 kann je nach Ausbildung möglich sein.

Solche Stapelsicherungen 9 sind daher auch gesondert und ohne die Transportkarren 1 handel- und transportierbar und hier auch gesondert beansprucht.

Die Stapelsicherung 9 gemäß Figur 3 ff. weist zum Beispiel eine Längserstreckung L von 120 bis 160 Millimetern, insbesondere von 140 Millimetern, auf. Auch kürzere Versionen sind möglich, wie etwa in Figur 11, wo die Längserstreckung nur etwa 50 bis 60 Millimeter beträgt. Die lichte innere Weite W liegt parallel zu einer Kante beispielhaft bei 45 Millimetern, wobei die Umrißgestalt zumindest nahezu quadratisch ist.

Die Stapelsicherung 9 kann auf das obere, offene Ende 8 einer Eckstütze 4 aufgesetzt werden. Um dort ein Abrutschen der Stapelsicherung 9 nach unten auf der Eckstütze 4 zu verhindern, weist die Stapelsicherung 9 zumindest einen Halteansatz 10 auf, mit dem sie auf dem oberen Ende 8 abstützbar ist.

Ein solcher Halteansatz 10 kann beispielsweise durch eine oder mehrere ausgestanzte und nach innen gebogene Haltezunge(n) gebildet sein. In Figur 4 ff. ist eine Lösung gezeigt, bei der der Halteansatz 10 durch einen oder mehrere, zum Beispiel zwei, Stege 11 gebildet, der oder die zum Beispiel am manschettenartigen Außenmantel der Stapelsicherung 9 angeschweißt ist oder sind und der oder die in montierter Stellung auf dem oberen Ende 8 einer Eckstütze 4 aufliegt oder aufliegen. Hier sind in der Zeichnung zwei zueinander parallele Stege 11 gezeigt, die mit Abstand zueinander angeordnet sind und zwischen die schräg eingebogene Enden oder Laschen 7 eines unteren Endes eines Hülsenprofils 6 einer oberen Transportkarre 1 eingreifen können. Bei Stapelsicherungen kann auch gut ein umlaufender Steg als Halteansatz 10 angeformt sein, der ein Herunterrutschen einer aufgesetzten Stapelsicherung 9 verhindert, wie in den Figuren 11 und 12 dargestellt ist.

Die Stapelsicherung 9 gemäß den Figuren 3 und 4 ist insgesamt manschetten- oder hülsenartig ausgebildet ist und umgreift in montierter Stellung sowohl das obere Ende 8 einer Eckstütze 4 als auch das untere Ende eines Hülsenprofils 6 außenseitig. Der hülsenartige Körper ist dabei idealerweise dünnwandig mit einer Wandstärke von weniger als 1,5 Millimetern. Da in einem LKW häufig drei solcher Transportkarren 1 nebeneinander gestapelt werden (zwei längs, einer quer), beträgt der gesamte Breitenzuwachs dann insgesamt 9 Millimeter, wenn alle sechs Eckstützen 4 einer Querlinie mit solchen Stapelsicherungen 9 versehen sind. Da in einem Norm-LKW bei einer solchen Beladung zu den Seiten 10 Millimeter Platz ist, muß daher auch bei montierten Stapelsicherungen 9 die Beladungsdichte nicht verringert werden.

Üblicherweise umfaßt der Tragrahmen 5 horizontale Profile 5a, die an die Hülsenprofile 6 angebunden sind. Zumindest ein Teil der Bereiche der Anbindung sind mit einem vertikalen Steg 12 ausgesteift, wobei diese aussteifenden Stege oder Knoten 12 gegenüber den horizontalen Profilen 5a als Stehbleche nach unten vorstehen, üblicherweise mit einer Höhenerstreckung H von ca. 23 bis 25 Millimetern. Derartige Knoten 12 sind üblicherweise nur den längsten horizontalen Profilen 5a der Tragrahmen 5 zugeordnet, also in Richtung Li erstreckt. Dort haben die Tragrahmen 5 zum Beispiel eine Länge von mehr als einem Meter. Insbesondere ist eine solche Transportkarre 1 1,35 Meter lang und 56,5 Zentimeter breit.

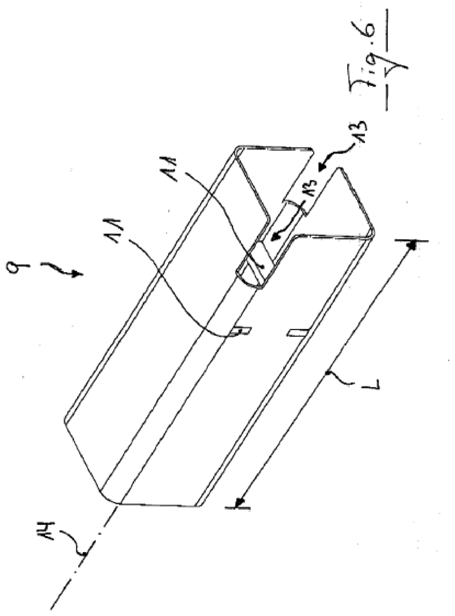

Besonders günstig ist es daher, wenn - wie in Figur 3 oder Figur 6 gut sichtbar ist - die Stapelsicherungen 9 in ihren oberen Bereichen jeweils zumindest eine Ausnehmung 13 aufweisen, in die in montierter Stellung der aussteifende Steg 12 der oberen Transportkarre 1 eingreift (Figur 3). Alternativ kann wie in Figur 11 die Stapelsicherung 9 so niedrig sein, daß sie in montierter Stellung mit ihrer oberen Kante unter dem Knoten 12 endet.

Die Ausnehmung 13 ist dabei insbesondere als vertikale Schlitzausnehmung ausgebildet, so daß die Schwächung der Stapelsicherung 9 gering bleibt.

Es kann in zwei einander diagonal gegenüber gelegenen oberen Eckbereichen eine solche Ausnehmung 13 vorgesehen sein (Figur 6). In montierter Stellung ist dann zum Beispiel nur eine der beiden Ausnehmungen 13 in Funktion, es genügt jedoch eine einzelne Art von Stapelsicherungen 9. Wenn die Ausnehmung wie in Figur 6 genau einen Eckbereich des vierkantförmigen Profils durchgreift und dabei axialsymmetrisch zu beiden Seiten des Eckbereichs erstreckt ist, kann auch nur eine Ausnehmung 13 ausreichen, um dennoch alle Einsatzstellen abzudecken. Ohne diese Axialsymmetrie, also bei Einschnitt der Ausnehmung 13 mehr in die Frontflächen 15, 16, können auch die beiden gegenüberliegenden Ausnehmungen 13 erforderlich sein, um alle Orientierungen abzudecken.

Mit der nur einen Ausführungsform kann in unterschiedlichen Orientierungen um eine Längsachse 14 (jeweils um 90° gedreht) sowohl eine Anordnung in einer "rechten" Ecke der Langseite der Transportkarre als auch in einer "linken" Ecke der Langseite der Transportkarre 1 möglich sein, in der der aussteifende Knoten (Steg 12) im ersten Fall nach links und im zweiten Fall nach rechts weist. Damit kann ein solcher Steg 12 in jedem Fall in eine Ausnehmung 13 eintauchen, so daß die Stapelsicherung 9 mit ihrer Oberkante gar keinen oder nur einen minimalen Abstand (zum Beispiel einen bis 3 Millimeter) von dem horizontalen Profil 5a der oberen Transportkarre 1 aufweist. Die obere Transportkarre 1 muß nicht auf der Hülse der Stapelsicherung 9 abgestützt sein, sondern diese kann leichtes Spiel aufweisen. Zur Montageerleichterung können um 90° gegeneinander versetzte Frontflächen 15, 16 des Hülsenkörpers 17 unterschiedliche Markierungen, zum Beispiel unterschiedliche Farben, aufweisen. Dann weist bei Ansicht von jedweder Seite auf den Stapel dieser immer links eine Frontfläche 15 einer Farbe und rechts eine Frontfläche 16 der anderen Farbe auf. Die Montage ist dann richtig, wenn immer diese zwei Farben 15, 16 sichtbar sind.

In der Version nach Figur 5 ist kein über die ganze Längserstreckung durchgehender Hülsenkörper 17 an der Stapelsicherung 9 gebildet, sondern im unteren Bereich sind Einsteckansätze 18 vorgesehen, die in das obere Ende 8 einer Eckstütze 4 einsteckbar sind. Auch weitere geometrische Lösungen sind möglich.

Ebenso muß eine solche Stapelsicherung 9 nicht, wie in den hier gezeigten Beispielen, einstückig sein. Dies erleichtert jedoch sehr ihre Handhabung.

Es ist möglich, daß die Stapelsicherungen 9 jeweils zum einmaligen Gebrauch bestimmt sind. Auch eine nachhaltige vielfache Nutzung ist insbesondere bei metallischen Stapelsicherungen leicht möglich.

### Bezugszeichenliste:

1: Transportkarre (Container),
2: Rollen,
3: Bodenfläche,
4: Eckstütze (Holm),
5: Tragrahmen,
5a: horizontale Profile,
6: Hülsenprofile,
7: Laschen,
8: obere Enden,
9: Stapelsicherung(en),
10: Hatteansatz,
11: Steg(e),
12: aussteifende Stege (Knoten),
13: Ausnehmung,
14: Längsachse,
15: erste Frontfläche,
16: zweite Frontfläche,
17: Hülsenkörper,
17a: Vierkantprofil,
17b: Hülsenkörper,
18: Einsteckansätze,
19: Kragen,
20: Haltebereich,
21: Begrenzungsstruktur,
L: Länge der Stapelsicherung,
H: Höhe des Steges,
W: Lichte Weite,
Li: Richtung nach längs innen,
Qi: Richtung nach quer innen.

## Patentansprüche

1. Stapelsicherung (9) zur Verbindung von mehreren stapelbaren Transportkarren, wobei die Stapelsicherung (9) zumindest an einem axialen Ende einen Hülsenkörper (17; 17a; 17b) ausbildet, dessen lichte innere Weite (W) bei mindestens 40 Millimetern liegt und der im Innern zumindest einen in seinen Innenraum ragenden Sicherungsansatz (10) aufweist, der eine überlaufende Bewegung auf einen in den Innenraum eindringbaren Körper (4) stoppt und wobei der Hülsenkörper (17; 17a; 17b) im Querschnitt ein Vierkantprofil ausbildet und an einem axial auswärts weisenden Ende zumindest eine in seinem Eckbereich gelegene Ausnehmung (13) aufweist, wobei die Stapelsicherung ein frei von den Transportkarren bewegliches Einzelteil bildet und ein Kunststoffkörper ist.

2. Stapelsicherung (9) nach Anspruch 1, ***dadurch gekennzeichnet, daß*** die Ausnehmung (13) als axialer Schlitz von mindestens 25 Millimeter Höhe parallel zur Längsachse (14) erstreckt ist.

3. Stapelbare Transportkarre (1) mit einem Tragrahmen (5), der in Eckbereichen Hülsenprofile (6) aufweist, in die oder an die nach oben ragende Eckstützen (4) ein- oder aufsteckbar sind, über deren Zusammenwirkung mit unteren Bereichen von Hülsenprofilen (6) einer weiteren Transportkarre (1) diese abstützbar ist, und mit frei von der Transportkarre (1) beweglichen Stapelsicherungen (9) nach Anspruch 1, ***dadurch gekennzeichnet, daß*** der Transportkarre (1) die Stapelsicherungen (9) im Bereich der oberen Enden (8) der Eckstützen (4) zugeordnet sind, die im gestapelten Zustand jeweils einen unteren Bereich eines Hülsenprofils (6) einer oberen Transportkarre (1) und einen oberen Bereich (8) einer Eckstütze (4) einer unteren Transportkarre (1) gegeneinander zwangsausgerichtet und kippgesichert zueinander halten.

4. Stapelbare Transportkarre (1) mit einem Tragrahmen (5), der in Eckbereichen Hülsenprofile (6) aufweist, in die oder an die nach oben ragende Eckstützen (4) ein- oder aufsteckbar sind, über deren Zusammenwirkung mit unteren Bereichen von Hülsenprofilen (6) einer weiteren Transportkarre (1) diese abstützbar ist, und mit frei von der Transportkarre (1) beweglichen Stapelsicherungen (9) nach Anspruch 1, ***dadurch gekennzeichnet, daß*** der Transportkarre (1) die Stapelsicherungen (9) im Bereich der oberen Enden (8) der Eckstützen (4) zugeordnet sind, wobei im gestapelten Zustand eine Stapelsicherung (9) das untere Ende eines Hülsenprofils (6) einer oberen Transportkarre (1) zumindest im Wesentlichen seitlich umgreift und diese kippgesichert zu einer Eckstütze (4) der unteren Transportkarre (1) hält.

5. Transportkarre (1) nach einem der Ansprüche 3 oder 4, ***dadurch gekennzeichnet, daß*** die Stapelsicherung (9) gegenüber der oberen und gegenüber der unteren Transportkarre (1) werkzeugfrei lösbar ist.

6. Transportkarre (1) nach einem der Ansprüche 3 bis 5, ***dadurch gekennzeichnet, daß*** jede der Eckstützen (4) einer unteren Transportkarre (1) mit einer Stapelsicherung (9) versehbar ist.

7. Transportkarre (1) nach einem der Ansprüche 3 bis 6, ***dadurch gekennzeichnet, daß*** die Stapelsicherung (9) in sich formstabil ist.

8. Transportkarre (1) nach einem der Ansprüche 3 bis 7, ***dadurch gekennzeichnet, daß*** die Stapelsicherung auf ein oberes, offenes Ende (8) einer Eckstütze (4) aufsetzbar ist und zumindest einen Halteansatz (10) aufweist, der ein Abrutschen der Stapelsicherung (9) nach unten auf der Eckstütze (4) verhindert.

9. Transportkarre (1) nach Anspruch 8, ***dadurch gekennzeichnet, daß*** der Halteansatz (10) durch eine oder mehrere ausgestanzte und nach innen gebogene Haltezunge(n) gebildet ist.

10. Transportkarre (1) nach Anspruch 8, ***dadurch gekennzeichnet, daß*** der Halteansatz (10) durch einen oder mehrere Stege (11) gebildet ist, die in montierter Stellung auf dem oberen Ende einer Eckstütze (4) aufliegt oder aufliegen.

11. Transportkarre (1) nach einem der Ansprüche 3 bis 10, ***dadurch gekennzeichnet, daß*** die Stapelsicherung (9) insgesamt im wesentlichen hülsenartig (17) ausgebildet ist und in montierter Stellung sowohl das obere Ende (8) einer Eckstütze (4) als auch das untere Ende eines Hülsenprofils (6) zumindest bereichsweise außenseitig umgreift.

12. Transportkarre (1) nach einem der Ansprüche 3 bis 11, ***dadurch gekennzeichnet, daß*** der Tragrahmen (5) horizontale Profile (5a) umfaßt, die an die Hülsenprofile (6) angebunden sind, wobei zumindest ein Teil der Bereiche der Anbindung mit einem vertikalen Steg (12) ausgesteift ist und wobei diese Stege (12) gegenüber den Profilen (5a) nach unten vorstehen.

13. Transportkarre (1) nach Anspruch 12, ***dadurch gekennzeichnet, daß*** die Stapelsicherungen (9) in ihren oberen Bereichen jeweils zumindest eine Ausnehmung (13) aufweisen, in die in montierter Stellung der Steg (12) der oberen Transportkarre (1) eingreift.

14. Transportkarre (1) nach Anspruch 13, ***dadurch gekennzeichnet, daß*** die Ausnehmung (13) als vertikale Schlitzausnehmung ausgebildet ist.

15. Transportkarre (1) nach einem der Ansprüche 3 bis 14, ***dadurch gekennzeichnet, daß*** die Stapelsicherung (9) ein manschettenartiges Vierkantprofil (17; 17a) umfaßt und zumindest in zwei einander diagonal gegenüber gelegenen oberen Eckbereichen eine solche Ausnehmung (13) vorgesehen ist.

16. Transportkarre (1) nach einem der Ansprüche 3 bis 15, ***dadurch gekennzeichnet, daß*** ein einziger Typ von Stapelsicherungen (9) für alle Ecken einer Transportkarre (1) vorgesehen und insbesondere in verschiedenen Orientierungen an diese ansetzbar ist.

## Claims

1. A stacking safety device (9) for connecting several stackable transport carts, wherein the stacking safety device (9) at least at an axial end forms a sleeve body (17; 17a; 17b), whose clear internal width (W) lies at least at 40 millimeters, and which internally has at least one safety attachment (10) that protrudes into its interior space, which stops an overflowing movement onto a body (4) that can penetrate into the interior space, and wherein the sleeve body (17; 17a; 17b) forms a square profile in cross section, and at one axially outwardly facing end has at least one recess (13) lying in its corner area, wherein the stacking safety device is a separate component that can be moved independently of the transport carts and is a plastic body.

2. The stacking safety device (9) according to claim 1, ***characterized in that*** the recess (13) as an at least 25 millimeter high axial slit extends parallel to the longitudinal axis (14).

3. A stackable transport cart (1) with a carrying frame (5), which has sleeve profiles (6) in corner areas that can be inserted into or plugged onto the upwardly protruding corner supports (4), which interact with lower areas of sleeve profiles (6) in another transport cart (1) so that the latter can be supported, and with stacking safety devices (9) according to claim 1 that can be moved freely from the transport cart (1)*, **characterized in that*** the transport cart (1) has allocated to it the stacking safety devices (9) in the area of the upper ends (8) of the corner supports (4), which in the stacked condition each keep a respective lower area of a sleeve profile (6) of an upper transport cart (1) and an upper area (8) of a corner support (4) of a lower transport cart (1) forcibly aligned and secured against tilting relative to each other.

4. A stackable transport cart (1) with a carrying frame (5), which has sleeve profiles (6) in corner areas that can be inserted into or plugged onto the upwardly protruding corner supports (4), which interact with lower areas of sleeve profiles (6) in another transport cart (1) so that the latter can be supported, and with stacking safety devices (9) according to claim 1 that can be moved freely from the transport cart (1), ***characterized in that*** the transport cart (1) has allocated to it the stacking safety devices (9) in the area of the upper ends (8) of the corner supports (4), wherein, in the stacked condition, a stacking safety device (9) at least essentially laterally grasps the lower end of a sleeve profile (6) of an upper transport cart (1) and keeps it secured against tilting relative to a corner support (4) of the lower transport cart (1).

5. The transport cart (1) according to one of claims 3 or 4, ***characterized in that*** the stacking safety device (9) can be detached from the upper and from the lower transport cart (1) without any tools.

6. The transport cart (1) according to one of claims 3 to *5, **characterized in that*** each of the corner supports (4) of a lower transport cart (1) can be provided with a stacking safety device (9).

7. The transport cart (1) according to one of claims 3 to 6, ***characterized in that*** the stacking safety device (9) is inherently dimensionally stable.

8. The transport cart (1) according to one of claims 3 to 7, ***characterized in that*** the stacking safety device can be placed on an upper, open end (8) of a corner support (4), and has at least one retaining attachment (10) that prevents the stacking safety device (9) from downwardly sliding onto the corner support (4).

9. The transport cart (1) according to claim 8, ***characterized in that*** the retaining attachment (10) is formed by one or several punched and inwardly bent retaining tongue(s).

10. The transport cart (1) according to claim 9, ***characterized in that*** the retaining attachment (10) is formed by one or several webs (11), which in the assembled position rests or rest on the upper end of a corner support (4).

11. The transport cart (1) according to one of claims 3 to 10, ***characterized in that*** the stacking safety device (9) as a whole is essentially sleeve-shaped (17), and in the assembled position at least regionally outwardly grasps both the upper end (8) of a corner support (4) and the lower end of a sleeve profile (6).

12. The transport cart (1) according to one of claims 3 to 11, ***characterized in that*** the support frame (5) comprises horizontal profiles (5a), which are attached to the sleeve profile (6), wherein at least a portion of the attachment area is reinforced with a vertical web (12), and wherein these webs (12) protrude downwardly relative to the profiles (5a).

13. The transport cart (1) according to claim 12, ***characterized in that*** the upper areas of the stacking safety devices (9) each have at least one recess (13), into which the web (12) of the upper transport cart (1) engages in the assembled position.

14. The transport cart (1) according to claim 13, ***characterized in that*** the recess (13) is designed as a vertical slot recess.

15. The transport cart (1) according to one of claims 3 to 14, ***characterized in that*** the stacking safety device (9) comprises a cuff-like square profile (17; 17a), and such a recess (13) is provided at least in two upper corner areas lying diagonally opposite each other.

16. The transport cart (1) according to one of claims 3 to 15, ***characterized in that** a* single type of stacking safety devices (9) is provided for all corners of a transport cart (1), and in particular can be attached to the latter in various orientations.

## Revendications

1. Sécurisation d'empilage (9), destinée à assembler plusieurs chariots de manutention empilables, la sécurisation d'empilage (9) formant au moins sur une extrémité axiale un corps de manchon (17 ; 17a ; 17b), dont la largeur interne (W) libre se situe à au moins 40 millimètres et qui comporte à l'intérieur au moins un embout de sécurisation (10) saillant dans son espace intérieur, qui arrête un déplacement débordant sur un corps (4) susceptible de pénétrer dans l'espace intérieur et le corps de manchon (17 ; 17a ; 17b) formant dans la section transversale un profilé carré et qui sur une extrémité tournée vers l'extérieur en direction axiale, comporte au moins un évidement (13) situé dans sa zone angulaire, la sécurisation d'empilage forme une pièce individuelle librement déplaçable du chariot de manutention et est un corps en matière plastique.

2. Sécurisation d'empilage (9) selon la revendication 1, ***caractérisé en ce que*** sous la forme d'une fente axiale, l'évidement (13) s'étend d'une hauteur d'au moins 25 millimètres à la parallèle de l'axe longitudinal (14).

3. Chariot de manutention (1) empilable, pourvu d'un châssis de support (5), qui dans des zones angulaires comporte des profilés formant manchon (6) sur lesquels ou dans lesquels sont insérables ou emboîtables des supports d'angle (4) saillant vers le haut, par la coopération desquels avec des zones inférieures de profilés formant manchons (6) d'un autre chariot de manutention (1) ce dernier peut est soutenu, et pourvu de sécurisations d'empilage (9) selon la revendication 1, déplaçables librement du chariot de manutention (1) ***caractérisé en ce qu'***au chariot de manutention (1) sont associées les sécurisations d'empilage (9) dans la zone des extrémités (8) supérieures des supports d'angle (4), qui en position empilée, maintiennent l'une contre l'autre en alignement forcé et de manière à en empêcher le basculement chaque fois une zone inférieure d'un profilé formant manchon (6) d'un chariot de manutention (1) supérieur et une zone supérieure (8) d'un support d'angle (4) d'un chariot de manutention (1) inférieur.

4. Chariot de manutention (1) empilable, pourvu d'un châssis de support (5), qui dans des zones angulaires comporte des profilés formant manchon (6) sur lesquels ou dans lesquels sont insérables ou emboîtables des supports d'angle (4) saillant vers le haut, par la coopération desquels avec des zones inférieures de profilés formant manchons (6) d'un autre chariot de manutention (1) ce dernier peut est soutenu, et pourvu de sécurisations d'empilage (9) selon la revendication 1, déplaçables librement du chariot de manutention (1)*, **caractérisé en ce qu'***au chariot de manutention (1) sont associées les sécurisations d'empilage (9) dans la zone des extrémités (8) supérieures des supports d'angle (4), en position empilée une sécurisation d'empilage (9) entourant latéralement au moins sensiblement l'extrémité inférieure d'un profilé formant manchon (6) d'un chariot de manutention (1) supérieur et la maintenant en empêchant le basculement par rapport à un support d'angle (4) du chariot de manutention (1) inférieur.

5. Chariot de manutention (1) selon l'une quelconque des revendications 3 ou 4, ***caractérisé en ce que*** la sécurisation d'empilage (9) est désolidarisable sans outil du chariot de manutention (1) supérieur et inférieur.

6. Chariot de manutention (1) selon l'une quelconque des revendications 3 à 5, ***caractérisé en ce que*** chacun des supports d'angle (4) d'un chariot de manutention (1) inférieur peut être muni d'une sécurisation d'empilage (9).

7. Chariot de manutention (1) selon l'une quelconque des revendications 3 à 6, ***caractérisé en ce que*** la sécurisation d'empilage (9) est indéformable en soi.

8. Chariot de manutention (1) selon l'une quelconque des revendications 3 à 7, ***caractérisé en ce que*** la sécurisation d'empilage peut s'emboîter sur une extrémité (8) supérieure ouverte d'un support d'angle (4) et comporte au moins un embout de maintien (10), qui empêche un dérapage vers le bas sur le support d'angle (4) de la sécurisation d'empilage (9).

9. Chariot de manutention (1) selon la revendication 8, ***caractérisé en ce que*** l'embout de maintien (10) est formé d'une ou de plusieurs languette(s) de maintien découpées et recourbées vers l'intérieur.

10. Chariot de manutention (1) selon la revendication 8, ***caractérisé en ce que*** l'embout de maintien (10) est formé d'une ou de plusieurs barrettes (11), qui en position de montage repose ou reposent sur l'extrémité supérieure d'un support d'angle (4).

11. Chariot de manutention (1) selon l'une quelconque des revendications 3 à 10, ***caractérisé en ce que*** la sécurisation d'empilage (9) est globalement conçue sensiblement en forme de manchon (17) et en position de montage, entoure sur la face extérieure au moins par endroits aussi bien l'extrémité (8) supérieure d'un support d'angle (4) qu'également l'extrémité inférieure d'un profilé formant manchon (6).

12. Chariot de manutention (1) selon l'une quelconque des revendications 3 à 11, ***caractérisé en ce que*** le châssis de support (5) comprend des profilés (5a) horizontaux, qui sont attachés sur les profilés formant manchon (6), au moins une partie des zones d'attache étant renforcée par une barrette (12) verticale et lesdites barrettes (12) débordant vers le bas par rapport aux profilés (5a).

13. Chariot de manutention (1) selon la revendication 12, ***caractérisé en ce que*** les sécurisations d'empilage (9) comportent dans leurs zones supérieures chaque fois au moins un évidement (13), dans lesquels en position de montage, s'engage la barrette (12) du chariot de manutention (1) supérieur.

14. Chariot de manutention (1) selon la revendication 13, ***caractérisé en ce que*** l'évidement (13) est conçu sous la forme d'un évidement vertical en forme de fente.

15. Chariot de manutention (1) selon l'une quelconque des revendications 3 à 14, ***caractérisé en ce que*** la sécurisation d'empilage (9) comprend un profilé carré (17 ; 17a) en forme de manchette et **en ce qu'**un tel évidement (13) est prévu au moins dans deux zones angulaires supérieures mutuellement opposées en diagonale.

16. Chariot de manutention (1) selon l'une quelconque des revendications 3 à 15, ***caractérisé en ce qu***'il est prévu un seul type de sécurisations d'empilage (9) pour tous les angles d'un chariot de manutention (1) et en ce qu'elle peut s'appliquer sur celui-ci dans différentes orientations.
